# EUROPEAN PATENT APPLICATION

(11) **EP 4 609 708 A1**
(43) Date of publication of application: **03.09.2025**
(21) Application number: 25157314.3
(22) Date of filing: 12.02.2025
(51) Int. Cl.: A01K 39/01

(54) **BIRD FEEDER HAVING INTEGRATED PERCHES**

(30) Priority: 12.02.2024 US 202463552392 P
(71) Applicant: Cote, Paul L., Knowlton, QC J0E 1V0 (CA)
(72) Inventor: Cote, Paul L., Knowlton, QC J0E 1V0 (CA)
(74) Representative: Bottino, Giovanni

(57) **Abstract**

The present disclosure provides a bird feeder having a seed container, seed tray, shroud, cover as well as integrated perches. The integrated perches provide less breakage and easier handling of the bird feeder, as the pivot point of the perches is not easily accessible by an operator or a bird.

## Description

### FIELD

The disclosure relates generally to the field of bird feeders, and more specifically to a bird feeder having integrated perches and an improved seed tray.

### BACKGROUND

Bird feeders have been around for quite some time for bird watchers and animal lovers. However, many problems exist with current bird feeders, including but not limited to flimsy bird perches that can break easily. Indeed, the existing bird perches on bird feeders can easily be removed from notches on the shroud and therefore be lost or loosen or break under the weight of the bird.

As such, there is a need for a novel type of bird feeder that can overcome the problems of the prior art.

### SUMMARY

In an aspect, the present disclosure provides a bird feeder comprising: a seed container to contain seeds; a seed tray connected to the seed container and adapted to provide access to the seeds; a shroud engaged with the seed tray, the shroud moveable between a first position to provide access to the seeds and a second position to deny access to the seeds; at least one integrated perch to facilitate bird access to the seeds; and, a cover releasably secured to the seed container.

In another aspect the present disclosure provides a shroud having a base for use with a bird feeder, the shroud comprising: at least one integrated perch to facilitate bird access to bird seeds; at least one opening through which is fitted the at least one integrated perch; wherein the at least one integrated perch is pivotally engaged with the shroud.

### BRIEF DESCRIPTION OF THE DRAWINGS

The following figures serve to illustrate various embodiments of features of the disclosure. These figures are illustrative and are not intended to be limiting.
Figure 1 is a perspective view of a bird feeder, according to an embodiment of the present disclosure;
Figure 2 is an enlarged perspective cross-sectional view of integrated perches projecting out of a shroud of the bird feeder of Figure 1, according to an embodiment of the present disclosure;
Figure 3 is a perspective view of a base having integrated perches of the bird feeder of Figure 1 in a first extended position, according to an embodiment of the present disclosure;
Figure 4 is a perspective of a base having integrated perches of the bird feeder of Figure 1 in a second folded position, according to an embodiment of the present disclosure; and,
Figure 5 is an exploded view of the base interconnected with an upper and lower crimp member of the bird feeder of Figure 1, according to an embodiment of the present disclosure.

### DETAILED DESCRIPTION

The following embodiments are merely illustrative and are not intended to be limiting. It will be appreciated that various modifications and/or alterations to the embodiments described herein may be made without departing from the disclosure and any modifications and/or alterations are within the scope of the contemplated disclosure.

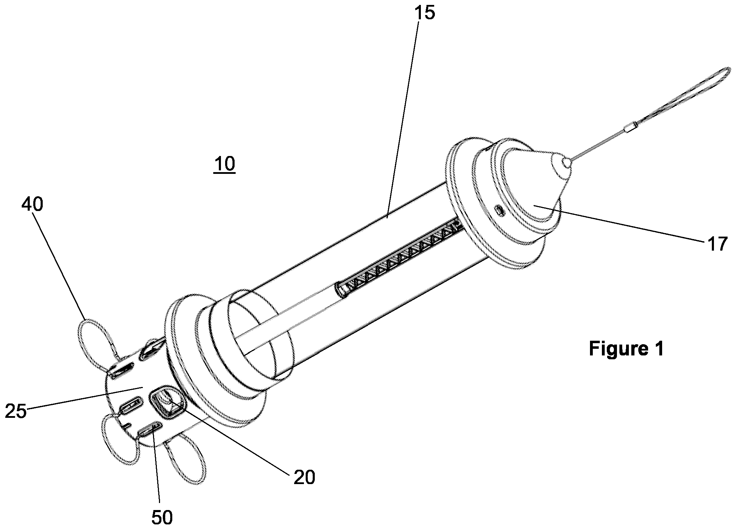

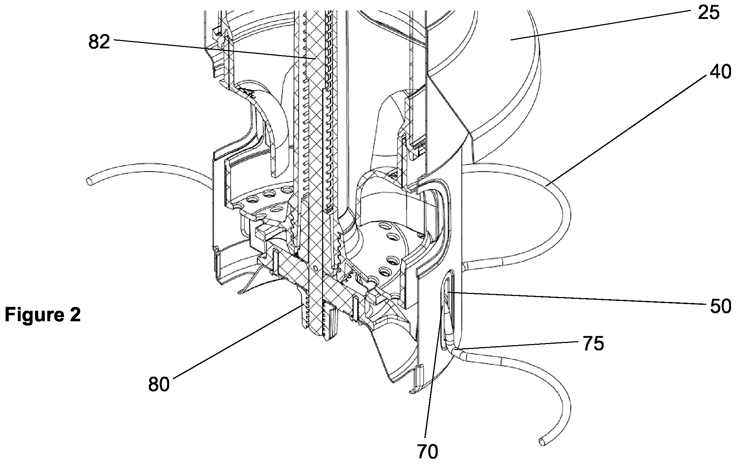

With reference to Figures 1 and 2 and according to an embodiment of the present disclosure, a bird feeder 10 is shown, preferably comprising a seed container 15 to contain seeds and capped by a cover 17, a seed tray 20 adapted to hold and provide access to the seeds, a shroud 25, the shroud 25 moveable from a first position, where access to the seeds is permitted, to a second position, where access to the seeds is denied. The bird feeder 10 is also comprised of integrated perches 40 on which a bird can perch to eat the seeds. The shroud 25 is further comprised of apertures 50 through which protrude the integrated perches 40. In a preferred embodiment, the apertures 50 are configured in pairs such that the perches 40 go in and out of each pair of apertures 50, as best shown in Figure 1. In another embodiment, the perches 40 could form a loop and go in and out of the same aperture 50.

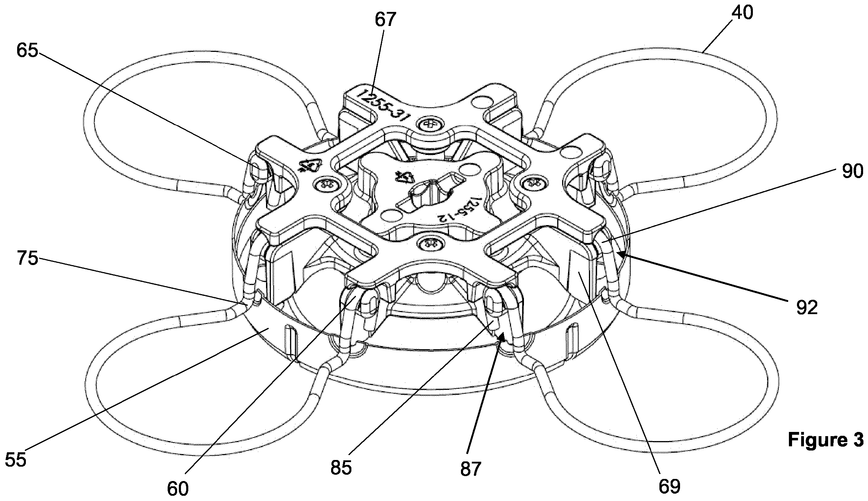

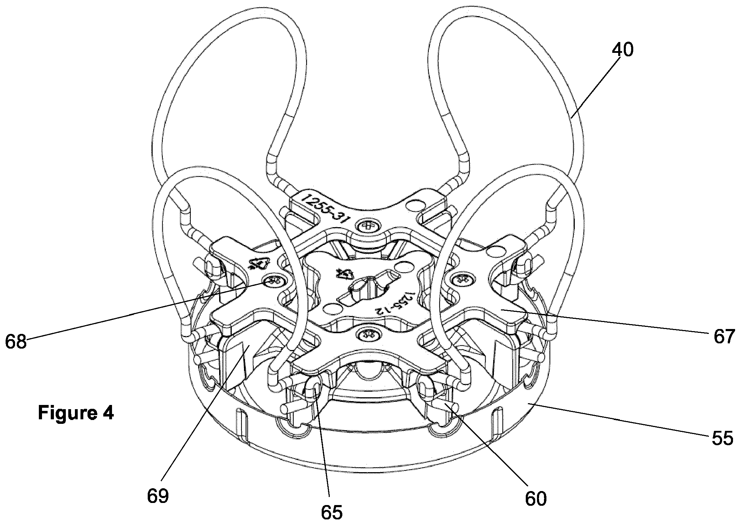

With reference to Figures 3, 4 and 5 and according to an embodiment of the present disclosure, the perches 40 are shown in greater detail, pivotably secured to a base 55 of the shroud (not shown) of the bird feeder (not shown). In an embodiment, the base 55 is secured to the shroud (not shown). Each one of the perches 40 terminates in a U-shape 60, each U-shape 60 pivotably engaged with a pivot point 65 of the base 55. The perches 40 are configured to pivot between a first extended position where the birds can perch on the perches 40 (shown in Figure 3), to a second folded position, where birds cannot perch (shown in Figure 4). In the second position, the bird feeder (not shown) is more easily able to be stored with a box and shipped out to consumers. In an embodiment, the base 55 is comprised of upper and lower crimp members 67, 69. The upper and lower crimp members 67, 69 are securable to the base 55 by means of screws 68 or other fastening means. In this way, the perches 40 are pivotally locked to the base 55, more specifically in between the upper and lower crimp members 67, 69.

With further reference to Figures 2 and 3 and according to an embodiment of the present disclosure, the base 55 is securable to the shroud 25 by means of screw 80 tightened around a rod 82, although the base 55 may simply be attached to the shroud 25, or the base 55 and shroud 25 may be formed as one integral component. Importantly, the shroud 25 has at least one opening 50 to accommodate the perches 40. In another embodiment, the shroud 25 is not comprised of pairs of openings but rather a plurality of singular openings (not shown) and the perches 40 would have a semi-circular or other suitable shape and pivotably secured in only the singular openings (not shown). The shroud 25 is comprised of a plurality of recessed portions 70 surrounding the openings 50, on which can more easily rest the perches 40 in the first position. Additionally, when a bird sits on the perches 40, which in turn rest on the shroud, this causes additional stress on the shroud 25 due to the weight of the bird. As such, the recessed portions 70 also reinforce the shroud 25. The perches 40 are configured to have a pair of indentations 75 configured to rest on the recessed portions 70 in the first position. In a preferred configured, each perch 40 has a first end 85 pivotally engaged with a first pivot point 87, the first end 85 extending out of the shroud 25 through a first opening 50 and into a second opening (not shown) and terminating in a second end 90 pivotally engaged with a second pivot point 92 such that the perch 40 pivots about both the first pivot point 87 and the second pivot point 92.

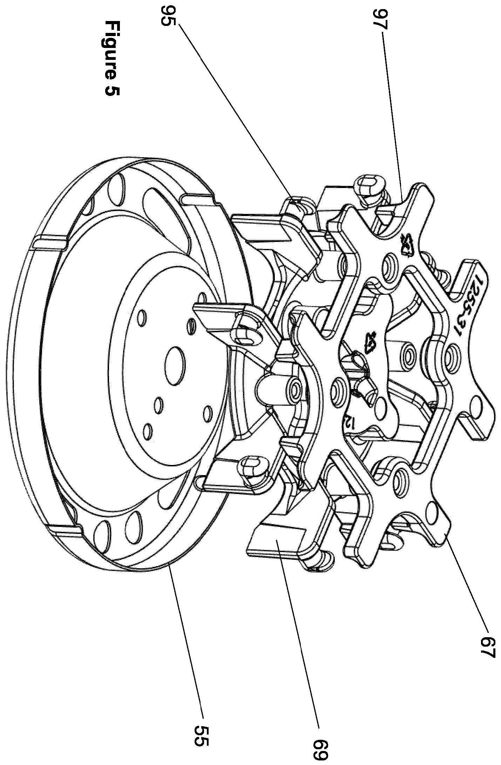

With reference to Figure 5 and according to an embodiment of the present disclosure, the lower crimp member 69 is comprised of a plurality of saddles 95 adapted to receive each end of the perch (not shown). Meanwhile, the upper crimp member 67 is comprised of concave walls 97. When the upper crimp member 67 is fastened to the lower crimp member 69, the saddles 95 are positioned below the concave walls 97. Together, the saddles 95 and concave walls 97 form the pivot points (not shown) around which can pivot the perches (not shown). Indeed, the perches (not shown) terminate in U-shapes (not shown) and are trapped in between the saddles 95 and concave walls 97. Although the base 55, upper crimp member 67 and lower crimp member 69 are three separate pieces, a worker skilled in the art would appreciate that the lower crimp member 69 and base 55 could be formed of or moulded in a singular piece. Alternatively, the base 55, lower crimp member 69 and upper crimp member 67 could be formed of or moulded in a singular piece.

Many modifications of the embodiments described herein as well as other embodiments may be evident to a person skilled in the art having the benefit of the teachings presented in the foregoing description and associated drawings. It is understood that these modifications and additional embodiments are captured within the scope of the contemplated disclosure which is not to be limited to the specific embodiment disclosed.

## Claims

1. A bird feeder comprising:
a seed container to contain seeds;
a seed tray connected to the seed container and adapted to provide access to the seeds;
a shroud engaged with the seed tray, the shroud moveable between a first position to provide access to the seeds and a second position to deny access to the seeds;
at least one integrated perch to facilitate bird access to the seeds; and,
a cover releasably secured to the seed container.

2. The bird feeder of Claim 1 wherein the shroud is further comprised of at least one opening through which is fitted the at least one integrated perch.

3. The bird feeder of Claim 1 wherein the at least one integrated perch is pivotally engaged with the shroud.

4. The bird feeder of Claim 1 further comprised of a crimp secured within the shroud.

5. The bird feeder of Claim 4 wherein the at least one integrated perch is pivotally engaged with the crimp.

6. The bird feeder of Claim 5 wherein the crimp is further comprised of an upper crimp and a lower crimp sandwiched to one another, and wherein the at least one integrated perch is pivotally engaged in between the lower and upper crimps.

7. The bird feeder of Claim 5 wherein the crimp is further comprised of an upper crimp and a base, and wherein the at least one integrated perch is pivotally engaged in between the upper crimp and the base.

8. The bird feeder of Claim 1 wherein the at least one integrated perch terminates in a U-shape allowing the at least one integrated perch to pivot about a pivot point.

9. The bird feeder of Claim 1 wherein the at least one integrated perch has at least one indentation configured to rest on the shroud.

10. The bird feeder of Claim 2 wherein the shroud is comprised of a plurality of recessed portions surrounding the at least one opening.

11. The bird feeder of Claim 2 wherein the at least one integrated perch has a first end pivotally engaged with a first pivot point, the first end extending out of the shroud through a first opening of the at least one opening and into a second opening of the at least one opening, and terminating in a second end pivotally engaged with a second pivot point such that the at least one integrated perch pivots about the first and second pivot points.

12. The bird feeder of Claim 4 wherein the crimp is further comprised of at least one concave wall cooperating with at least one saddle to form at least one pivot point around which can pivot the at least one integrated perch.

13. A shroud having a base for use with a bird feeder, the shroud comprising:
at least one integrated perch to facilitate bird access to bird seeds;
at least one opening through which is fitted the at least one integrated perch;
wherein the at least one integrated perch is pivotally engaged with the shroud.

14. The shroud of Claim 16 further comprising a crimp, wherein the at least one integrated perch is pivotally engaged with the crimp.

15. The shroud of Claim 16 wherein the at least one integrated perch terminates in a U-shape allowing the at least one integrated perch to pivot about a pivot point.

16. The shroud of Claim 16 wherein the at least one integrated perch has a first end pivotally engaged with a first pivot point, the first end extending out of the shroud through a first opening of the at least one opening and into a second opening of the at least one opening, and terminating in a second end pivotally engaged with a second pivot point such that the at least one integrated perch pivots about the first and second pivot points.
